# DEMANDE DE BREVET EUROPEEN

(11) **EP 3 767 475 A1**
(43) Date de publication de la demande: **20.01.2021**
(21) Numéro de dépôt: 20185829.7
(22) Date de dépôt: 14.07.2020
(51) Int. Cl.: G06F 11/34, G06F 21/60

(54) **DISPOSITIF ET PROCEDE POUR L ANALYSE DE PERFORMANCES D'UNE APPLICATION WEB**

(30) Priorité: 15.07.2019 FR 1907976
(71) Demandeur: Bull SAS, 78340 Les Clayes-sous-Bois (FR)
(72) Inventeur: DAMIEN, Aiello, 38500 La Buisse (FR); WAJIH, Chaabane, 73000 Chambery (FR); BRUNO, Demeilliez, 38380 Saint Laurent du Pont (FR)
(74) Mandataire: A.P.I. Conseil

(57) **Abrégé**

L'invention porte sur un dispositif et un procédé pour l'analyse de performances d'une application web capable de réaliser un traitement d'anonymisation (400) à la volée de données de production, lesdites données de production étant générées suite à un message de requête (MR1, MR2') de test de performances transmis à ladite application web, ledit traitement d'anonymisation (400) étant mis en œuvre par un premier dispositif électronique communicant (10) capable de
- Identifier, à partir d'un référentiel d'identification de données sensibles (14), des données à anonymiser dans le message de réponse (MRR1, MRR2) ;
- Générer, à partir d'un référentiel d'anonymisation (15), des données anonymisées à partir des données à anonymiser préalablement identifiées ; et
- Générer, à partir des données anonymisées et du message de réponse (MRR2), d'un message de réponse anonymisé (MRR2').

## Description

La présente invention concerne le domaine des tests de performance d'infrastructures informatiques et de chaines applicatives. Plus particulièrement, l'invention porte sur un procédé et un système d'analyse de performances d'une application web permettant la gestion de données confidentielles et/ou sensibles.

### [Art antérieur]

Les tests de performance (« Benchmark » en terminologie anglo-saxonne) peuvent avoir de nombreux objectifs tels que dimensionner une infrastructure nécessaire pour une application, valider les performances, l'endurance, la robustesse d'une application, ou encore identifier des problèmes existants d'une application.

Les applications (ou logiciels) de test de performance permettent en particulier de simuler plusieurs utilisateurs simultanément. Par exemple, pour une infrastructure informatique d'application Web (un réseau de serveurs Web), l'application de test de performance devra être capable d'envoyer vers l'infrastructure informatique un très grand nombre de requêtes (par exemple au format HTML), comme si elles provenaient d'utilisateurs simultanés différents.

Ces applications permettent de créer un ou plusieurs scénarios de test en choisissant une ou plusieurs catégories de requêtes à faire exécuter par l'application testée et en choisissant un débit de requêtes pour chaque scénario. Les applications de test effectuent un certain nombre de mesures (temps de réponse de l'infrastructure, taux d'erreurs, ou autre) et génèrent un rapport de test.

De manière générale, un test de performance d'infrastructure informatique, peut se dérouler en plusieurs étapes. Dans une première étape, la stratégie de test est définie, avec notamment la définition du contexte technique de l'architecture testée, le choix d'un ou plusieurs scénarios et la pondération de ces scénarios (c'est-à-dire la définition de l'importance relative des uns par rapport aux autres), la détermination de la volumétrie cible (c'est-à-dire le débit de requêtes souhaité pour le test), la détermination des types de requêtes à envoyer en fonction des objectifs du test, et la définition de l'architecture testée.

Ensuite, l'environnement du test est mis en place. Il s'agit par exemple d'appliquer une certaine configuration à l'architecture informatique testée pour pouvoir tester cette configuration en particulier.

Les scénarios de test sont ensuite définis au moyen d'applications de test (par exemple JMeter®) puis modifiés pour être paramétrables. Ensuite, à partir de ces définitions, les jeux d'injection d'instructions sont construits. Il s'agit de définir les paramètres des requêtes à envoyer vers l'infrastructure testée pour mettre en oeuvre les scénarios. Des scripts d'ordonnancement sont ensuite générés pour exécuter de façon chronologique les tâches nécessaires à la mise en œuvre des requêtes selon les jeux d'injection. Enfin, les requêtes sont exécutées lors d'une « campagne de tir » et les résultats sont mesurés et analysés pour générer un rapport.

Ainsi, pour réaliser ces tests de performance, il est nécessaire de disposer d'un jeu de données suffisant pour tester l'applicatif. Pour ce faire, une première solution serait d'utiliser les données de production de l'applicatif pour réaliser de tels tests de performance. Cependant, l'utilisation de telles données de production peut s'avérer impossible, notamment lorsque celles-ci contiennent des informations sensibles et/ou confidentielles ne pouvant être communiquées à des tiers. Il est alors d'usage de créer un jeu de données de test afin de pouvoir réaliser les tests de performance tout en respectant les règles de confidentialité des données imposées par les normes de régulation européennes.

Néanmoins, la création d'un jeu de données test peut s'avérer très complexe et chronophage de par la volumétrie dont il faut disposer pour effectuer de tels tests, mais également de la complexité à modifier les données d'origine pour respecter les normes de confidentialité. Des solutions ont été développées (US2018/373885 ou WO2014/116291) afin de garantir la confidentialité des données. Ainsi, ces solutions mettent en place un obscurcissement des données confidentielles à l'aide d'identifiant obscurci afin de former des représentations obscurcies des données. Toutefois ces solutions ne permettent pas de garantir la confidentialité des données de production mais des données de résultats, en outre, ces solutions engendrent des temps de réponse relativement long et sont donc propice au phénomène d'overhead (ou excès de temps).

Actuellement, les solutions connues ne permettent pas de tester l'applicatif à partir des données de production, il existe donc un besoin pour de nouvelles solutions permettant d'utiliser des données de production pour réaliser des tests de performance tout en garantissant la confidentialité et la cohérence de ces données.

### [Problème technique]

L'invention a donc pour but de remédier aux inconvénients de l'art antérieur. En particulier, l'invention a pour but de proposer un procédé d'analyse de performances d'une application web comportant un traitement d'anonymisation à la volée de données de production, ledit procédé permettant d'assurer la confidentialité des données sensibles desdites données de production tout en utilisant l'ensemble des données de production pour réaliser les tests de performance.

L'invention a en outre pour but de proposer un dispositif d'analyse de performances d'une application web, ledit dispositif permettant la réalisation de tests de performance à partir de données de production, dans le cadre d'applications web, tout en assurant l'anonymisation des données sensibles desdites données de production.

### [Brève description de l'invention]

A cet effet, l'invention porte sur un procédé pour l'analyse de performances d'une application web comportant un traitement d'anonymisation à la volée de données de production en particulier à destination d'un troisième dispositif électronique, lesdites données de production étant générées suite à un message de requête de test de performances, de préférence du troisième dispositif électronique, transmis à ladite application web,
ledit traitement d'anonymisation étant mis en œuvre par un premier dispositif électronique communicant comportant une unité de traitement, un moyen de communication, et une mémoire de données configurée pour mémoriser un référentiel d'identification de données sensibles et un référentiel d'anonymisation,
ledit traitement d'anonymisation à la volée de données de production de l'application web comprenant :
   - une étape de réception, par le moyen de communication, d'un message de réponse au message de requête de test de performances, suite à l'émission dudit message de réponse par un deuxième dispositif électronique communicant exécutant l'application web ;
   - une étape d'identification, par l'unité de traitement à partir du référentiel d'identification de données sensibles, de données à anonymiser dans le message de réponse;
   - une étape d'encodage, par l'unité de traitement à partir du référentiel d'anonymisation, comportant la génération de données anonymisées à partir des données à anonymiser préalablement identifiées;
   - une étape de génération, par l'unité de traitement à partir des données anonymisées et du message de réponse, d'un message de réponse anonymisé; et
   - une étape d'envoi, par le moyen de communication, du message de réponse anonymisé au troisième dispositif électronique, ledit message de réponse anonymisé comportant des données nécessaires à l'analyse de performances de l'application web.

Un tel procédé permet d'anonymiser à la volée des données de production d'une application web au fur et à mesure qu'elles sont transmises par l'application web à un troisième dispositif électronique, par exemple un dispositif électronique tiers. Ainsi, un utilisateur peut s'affranchir d'une étape fastidieuse de transformation d'un jeu de données avant la mise en place d'un test de performance. De plus, l'administrateur de l'application web sait que ces données seront anonymisées selon des procédures prédéterminées. Ainsi un tel procédé permet un gain de temps mais également des analyses au plus proche des conditions réelles. En outre, les analyses de performance peuvent être réalisées au niveau du premier dispositif ou dans un autre dispositif déporté. Ce procédé permet de conserver l'intégralité du jeu de données initiales, lesdites données initiales étant en partie confidentielles, d'optimiser l'anonymisation en chiffrant une partie des données initiales et de conserver la cohérence des données initiales pour pouvoir effectuer les tests désirés. En particulier, ce procédé permet de produire un jeu de données à des fins d'analyse de performance dont seulement une partie desdites données est anonymisée, seules les données décrites par le référentiel d'anonymisation sont encodées et ainsi le reste des données demeurent « lisibles ». Ce jeu de données, créé à la volée peut ainsi être utilisées lors des tests de performance tout en conservant la confidentialité des données.

Cette anonymisation sélective d'un ensemble de données permet donc de fournir un jeu de données complet pour la réalisation de tests de performance sur des applications web en toute sécurité / confidentialité.

**Selon d'autres caractéristiques du procédé, ce dernier peut inclure facultativement une ou plusieurs des caractéristiques suivantes, seules ou en combinaison :**
- il comporte en outre une étape d'enregistrement, sur un référentiel de correspondance entre des données à anonymiser et des données anonymisées de la mémoire de données, d'une correspondance entre chacune des données à anonymiser et chacune des données anonymisées correspondantes. La présence d'un tel référentiel et de cet enregistrement de correspondance permet de plus rapidement désanonymiser les données. Alternativement, un algorithme de désanonymisation, opposé à l'algorithme utilisé pour anonymiser les données, peut être utilisé.
- il comporte en outre une étape de mesure d'une pluralité de paramètres de fonctionnement de l'application web, de préférence au moins en partie à partir d'une pluralité de messages de réponse anonymisés. En outre cette étape peut comporter une mesure de consommation de ressources sur le deuxième dispositif par des sondes. Ainsi il sera possible de suivre les niveaux de service ou plus largement les performances de l'application web au cours du temps.
- il comporte en outre une étape de génération d'au moins une valeur d'indicateur de performance de l'application web. Cette étape de génération peut être réalisée par le premier dispositif informatique communicant ou par un autre dispositif tel que le deuxième dispositif informatique communicant. Ainsi, un utilisateur pourra disposer d'une information claire sur les performances de l'application web.
- il comporte en outre une étape de génération d'au moins un plan de charge comportant au moins un scénario d'un test de performances apte à permettre une génération d'une pluralité de messages de requête. Cette génération automatisée, par exemple à partir de données antérieures, permet un gain de temps significatif dans le cadre de l'analyse de performance.
- le plan de charge est préalablement enregistré sur une mémoire de données du troisième dispositif électronique communicant en charge d'effectuer le test de performances de l'application web. Ainsi le calcul d'un plan de charge est réalisé depuis un dispositif distinct du dispositif électronique portant l'application Web.
- Il comporte en outre une étape d'injection d'une charge applicative relative au scénario de test de performances, ladite étape d'injection de la charge applicative étant mise en œuvre par un module d'injection du troisième dispositif électronique communicant. Ainsi la charge est commandée depuis un dispositif distinct du dispositif électronique portant l'application Web.
- la charge applicative permet de simuler une activité de l'application web au travers de requêtes à destination de l'application web et en ce que ces requêtes sont interceptées par le premier dispositif électronique communicant. Ainsi le premier dispositif électronique communicant est indépendant du troisième dispositif électronique communicant.
- Il comporte une étape de comparaison des données d'un message de requête au référentiel de correspondance, et, lorsque ledit message de requête ne comprend aucune donnée anonymisée, une transmission, par le moyen de communication, du message de requête au deuxième dispositif électronique communicant. Une telle caractéristique permet une réelle interaction avec l'application Web lors de l'analyse de performance et cela sans qu'il y ait divulgation d'information sensible.
- Il comporte une identification d'une donnée anonymisée dans le message de requête puis une étape de restauration d'une donnée anonymisée (i.e. encodée), ladite étape de restauration comportant, par exemple à partir du référentiel de correspondance, la substitution dans le message de requête d'une donnée anonymisée par une donnée à anonymiser correspondante de façon à générer un message de requête restaurée. Une telle caractéristique permet une réelle interaction avec l'application Web lors de l'analyse de performance et cela sans qu'il y ait divulgation d'information sensible.
- l'étape d'encodage correspond à une anonymisation et/ou à une pseudonymisation de tout ou partie des données à anonymiser. En particulier la pseudonymisation permet la réalisation d'une analyse de performance selon des règles métier ce qui ne serait pas possible si les informations étaient entièrement chiffrées.

D'autres mises en œuvre de cet aspect comprennent des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

Ainsi, l'invention porte en outre sur un produit programme d'ordinateur comportant une ou plusieurs instructions interprétables ou exécutables par une unité de traitement d'un dispositif électronique communicant, l'interprétation ou l'exécution desdites instructions par ledit dispositif électronique communicant provoquant la mise en œuvre d'un procédé pour l'analyse de performances d'une application web selon l'invention.

L'invention porte en outre sur un dispositif électronique communicant pour l'analyse de performances d'une application web configuré pour exécuter un traitement d'anonymisation à la volée de données de production, lesdites données de production étant générées suite à un message de requête de test de performances, de préférence d'un troisième dispositif électronique, transmis à ladite application web, ledit dispositif électronique communicant comprenant :
- un moyen de communication configuré pour recevoir un message de réponse au message de requête de test de performances, suite à l'émission dudit message de réponse par un deuxième dispositif électronique communicant exécutant l'application web ;
- une mémoire de données configurée pour mémoriser un référentiel d'identification de données sensibles et un référentiel d'anonymisation, et
- une unité de traitement configurée pour analyser lesdits message de requête de test de performances et pour mettre un œuvre un traitement d'anonymisation à la volée des données de production, ladite unité de traitement étant en particulier configurée pour :
   ∘Identifier, à partir du référentiel d'identification de données sensibles, des données à anonymiser dans le message de réponse ;
   ∘Générer, à partir du référentiel d'anonymisation, des données anonymisées à partir des données à anonymiser préalablement identifiées ; et
   ∘ Générer, à partir des données anonymisées et du message de réponse, d'un message de réponse anonymisé ;
   ledit moyen de communication étant aussi configuré pour envoyer le message de réponse anonymisé au troisième dispositif électronique, ledit message de réponse anonymisé comportant des données nécessaires à l'analyse de performances de l'application web.

L'invention porte en outre sur un système pour l''analyse de performances d'une application web comportant :
- un dispositif électronique communicant configuré pour exécuter l'application web à analyser et pour recevoir un message de requête de test de performance et/ou émettre un message de réponse à une requête;
- un dispositif électronique communicant pour l'analyse de performances d'une application web selon l'invention.

En outre, un tel système comporte un troisième dispositif électronique configuré pour émettre le message de requête de test de performance et recevoir le message de réponse de préférence anonymisé.

D'autres avantages et caractéristiques de l'invention apparaitront à la lecture de la description suivante donnée à titre d'exemple illustratif et non limitatif, en référence aux Figures annexées :
[Fig 1] représente un schéma fonctionnel d'un système pour l'analyse de performances d'une application web.
[Fig 2] représente un schéma des différentes étapes d'un procédé pour l'analyse de performances d'une application web selon l'invention. Les étapes encadrées par des pointillés sont facultatives.
[Fig 3] représente un schéma d'un traitement d'anonymisation d'un procédé pour l'analyse de performances d'une application web selon l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en œuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en œuvre par des systèmes matériels spéciaux qui exécutent les fonctions ou actes spécifiés ou effectuer des combinaisons de matériel spécial et d'instructions informatiques.

### [Description de l'invention]

Dans la suite de la description, on entend par « dispositif électronique communicant » tout dispositif informatique ou toute infrastructure informatique comprenant une ou plusieurs ressources matérielles et/ou logicielles configurées pour envoyer et/ou recevoir des messages de requête et stocker des informations relatives auxdits message de requête apte à faire fonctionner une application ou une chaine applicative. La structure informatique peut être un serveur ou plusieurs, et peut par exemple être composée d'un serveur de présentation, d'un serveur métier et d'un serveur de données. Le dispositif électronique communicant peut également être un serveur « test » avec les mêmes ressources qu'un serveur de production ou bien un clone d'un serveur virtuel de production. De façon préférée, une structure informatique est un serveur.

L'expression « application web » au sens de l'invention désigne une application manipulable en ligne grâce à un navigateur web et qui ne nécessite donc pas d'installation sur les machines clientes.

L'expression « anonymisation à la volée de données de production » au sens de l'invention, correspond à une anonymisation dynamique des données de production, notamment suite à un message de réponse à une requête émise par un dispositif électronique communicant, tel qu'un client web, à destination d'un dispositif électronique communicant tiers, tel qu'un client proxy.

L'expression « message de requête de test de performances », correspond au sens de l'invention au fait d'envoyer, par une application de test de performance, vers un dispositif électronique communicant tel qu'un serveur web, un message HTTP, par exemple au format HTML. Un « message de requête restauré » au sens de l'invention correspond de préférence à un message de requête à destination de l'application dont le contenu a été modifié par la technologie selon l'invention de façon à remplacer des données anonymisées par les données sensibles correspondante.

Un « message de réponse » correspond généralement au sens de l'invention à la réponse faite par l'application web au message de requête de test de performances. Un « message de réponse anonymisé correspondra alors à un message de réponse pour lequel les données sensible (i.e. données à anonymisées) ont été remplacées par des données anonymisées.

Par « sonde » ou « sonde informatique », on entend au sens de l'invention un logiciel associé à un équipement qui permet d'effectuer, de gérer et faire remonter vers un équipement informatique des mesures destinées à informer entre autres des valeurs de paramètres de qualité de service, de l'état de fonctionnement des ressources ou de l'utilisation de ressources.

Par « plan de charge prédéterminé », on entend au sens de l'invention un fichier de configuration de la charge ou contrainte à appliquer à un dispositif informatique ou à une infrastructure informatique. Le fichier de configuration peut par exemple être un fichier, ou un ensemble de fichiers, qui permet d'associer plusieurs données ou champs. Cette association de champs est aussi appelée un enregistrement de charge. Un tel fichier de configuration de charge est, par exemple, un fichier XML, un fichier CSV, un fichier INI, un fichier JSON.... Un fichier de configuration de charge peut comporter un ou plusieurs enregistrements de charge. Il peut être généré à partir d'information renseignées par un utilisateur.

On entend par « Ressources » des ressources matérielles telles que des paramètres, des capacités ou des fonctions de dispositifs informatiques permettant le fonctionnement d'une application web. Un même dispositif informatique est associé généralement à plusieurs ressources. Par exemple, le terme « ressource » peut inclure des ressources physiques ou virtuelles telles que des disques réseaux caractérisé par exemple par leurs entrées/sorties (I/O), la lecture/écriture sur des disques, le taux d'utilisation de la mémoire, un réseau caractérisé par sa bande passante, un processeur caractérisé par exemple par son utilisation (en pourcentage) ou le taux d'occupation de ses caches, une mémoire vive caractérisée par la quantité allouée, ou de façon plus globale le temps de latence d'un processus ou les pertes de paquets.

Par « niveau d'utilisation de ressources », on entend, au sens de l'invention, une valeur représentative de la consommation ou de l'occupation de ladite ressource lors du fonctionnement d'une application web. Par exemple, la valeur d'utilisation peut correspondre pour des disques réseaux à leurs entrées/sorties, la lecture/écriture sur des disques, le taux d'utilisation de la mémoire, pour un réseau à sa bande passante, pour des processeurs à leur utilisation (en pourcent) ou au taux d'occupation des caches, pour de la mémoire vive la quantité utilisée et pour des ports, le nombre de ports ayant été ouverts simultanément lors du fonctionnement du procédé. La valeur d'utilisation est avantageusement ramenée au pourcentage du niveau de la ressource.

L'expression « niveau de service » au sens de l'invention correspond à une qualité de service à laquelle peut s'engager un tiers et ainsi garantir de bonnes performances pour les applications critiques d'une organisation. Ainsi, le niveau de service peut correspondre à des critères objectifs tels que des débits et des temps de réponse associés à une application web ou bien subjectif, et prendre par exemple la forme d'une échelle de valeur, numérique ou non, correspondant à une appréciation de la qualité du niveau de service. Le niveau de service peut correspondre à une ou plusieurs valeurs.

L'expression « transformation de données », au sens de l'invention, fait référence à toute technique visant à anonymiser un jeu de données. Une transformation de données pourra ainsi correspondre à une technique de chiffrement de données, dont la fonction est de rendre illisible ou tout au moins intelligible un tel jeu de données, ou encore à une technique d'encodage d'un jeu de données dont la fonction est de remplacer une donnée par une donnée tiers tout en conservant la lisibilité et l'intelligibilité du jeu de données. A titre d'exemple, l'encodage de données peut correspondre à une technique de pseudonymisation.

On entend par « indicateur de performances », la restitution à un utilisateur, notamment par l'intermédiaire d'une interface homme-machine adaptée, d'un rendu graphique suite à la réalisation d'un test de performance. Un tel indicateur de performances peut prendre la forme d'une ou plusieurs valeurs traduisant le niveau de performance de l'application web ou le niveau d'utilisation d'une ou plusieurs ressources. Ces indicateurs de performance peuvent être affichés sous la forme d'un graphique détaillant l'évolution de leurs valeurs dans le temps et au cours de la phase de test.

Le terme « injection », au sens de l'invention, peut correspondre à l'envoi de messages de requêtes à destination d'une application web, lesdits messages de requête étant interceptés par un dispositif électronique communicant configuré pour analyser et dé-anonymiser les données anonymisées comprises dans lesdits messages.

On entend par « traiter », « calculer », « déterminer », « afficher », « extraire » « comparer » ou plus largement « opération exécutable », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

L'expression « interface homme-machine » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans la suite de la description, les mêmes références sont utilisées pour désigner les mêmes éléments.

De manière générale, des processus de test de performances sont généralement requis dans le cadre de la création d'une application web mais également tout au long de son exploitation. En particulier, ces processus permettent, pour une application web et le dispositif informatique la supportant, de détecter les limites de performances, les faiblesses, et permettent par conséquent de déterminer les corrections à apporter, ainsi que de quantifier les gains apportés par ces éventuelles corrections.

Il se trouve, à cet égard, différents outils (ou logiciels) de test de performances permettant de simuler divers scénarios d'utilisation d'un dispositif informatique cible pour en détecter les défauts. Parmi ces outils, on cite, à titre d'exemples, l'outil WebLOAD® (proposé par RADVlEW®), l'outil LoadRunner® (proposé par HP®), l'outil Rational Performance Tester® (proposé par IBM®), l'outil SOAtest® & LoadTest® (proposé par PARASOFT®), l'outil TOSCA-Testsuite®, ou l'outil JMeter® (un logiciel libre édité par la Fondation Apache®).

Faisant généralement partie d'un kit de test de performances, ces outils permettent, en effet, de stresser un système d'information via une injection d'une ou de plusieurs charges. Une telle charge peut correspondre à l'envoi simultané de requêtes, conformément à des scénarios prédéfinis et à des instanciations différentes de ces scénarios. Notamment, ces différents types de scénarios peuvent inclure la simulation d'erreurs par la reproduction d'anomalies, ce genre de test nécessite généralement de disposer d'une volumétrie très importante de données de production. Dans la plupart des cas, ces tests de performance se font sur des jeux de données qui ont été préalablement anonymisés.

Néanmoins, l'anonymisation préalable d'un jeu de données est d'une part très chronophage et d'autre part limite les possibilités de test de performance. Ainsi, les inventeurs ont développé un procédé et un dispositif de performance comportant une anonymisation à la volée des données, en particulier de données de production.

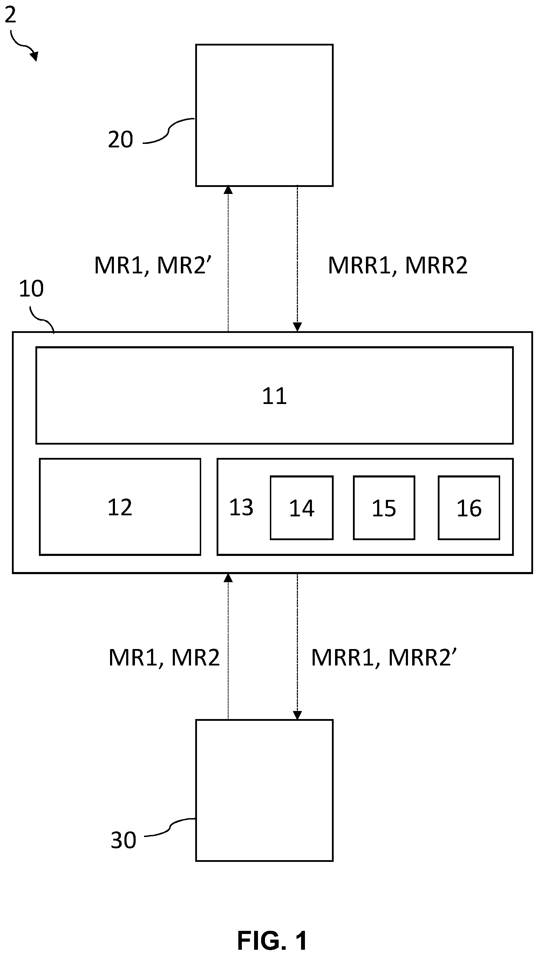

Ainsi, **selon un premier aspect,** l'invention porte sur un **dispositif électronique communicant 10 pour l'analyse de performances d'une application web.** En particulier, et comme illustré à la **figure 1****,** un dispositif 10 électronique communicant pour l'analyse de performances d'une application web selon l'invention peut comporter une unité de traitement 11, un moyen de communication 12 et une mémoire de données 13.

**L'unité de traitement 11** peut comporter un processeur pour l'exécution d'au moins une fonction d'analyse et de traitement de message de requête. En outre, l'unité de traitement 11 peut comporter ou être couplée à d'autres moyens tels que des combinaisons de processeurs, de mémoire ainsi que de codes supportant des instructions ou à une mémoire de données comportant une pluralité de référentiels mémorisés. L'unité de traitement 11 peut en particulier être configurée pour analyser lesdits message de requête (MR1, MR2) de test de performances et/ou message de réponse MRR1, MRR2. En outre, elle peut mettre un œuvre un traitement d'anonymisation à la volée des données de production. L'unité de traitement 11 étant en particulier configurée pour identifier, à partir du référentiel d'identification de données sensibles 14, des données à anonymiser dans le message de réponse MRR1, MRR2 ; générer, à partir du référentiel d'anonymisation 15, des données anonymisées à partir des données à anonymiser préalablement identifiées ; et générer, à partir des données anonymisées et du message de réponse MRR2, d'un message de réponse anonymisé MRR2'.

**Le moyen de communication 12** est apte à échanger des données avec des dispositifs tiers. Le moyen de communication 12 peut correspondre à tout élément ou combinaison d'éléments permettant à un utilisateur d'émettre des requêtes, via ou par un réseau de communication (par exemple LAN, WLAN, ou PAN, journal d'une base de données, courriel), vers des dispositifs tiers. Avantageusement, il est configuré pour recevoir un message de requête MR1, MR2 de test de performances et/ou un message de réponse MRR1, MRR2 et pour transmettre un message de requête de test de performance restauré MR2' ou non MR1 et/ou un message de réponse à une requête anonymisé MRR2'ou non MRR1.

**La mémoire de données 13** est avantageusement configurée pour mémoriser un référentiel d'identification de données sensibles 14 et un référentiel d'anonymisation 15. Elle peut en outre être configurée pour mémoriser un référentiel de correspondance 16 entre des données sensibles et des données anonymisées. La mémoire de données 13 peut comprendre une mémoire transitoire et/ou une mémoire non transitoire. La mémoire non transitoire peut être un support tel qu'un CDrom, une carte mémoire, un disque dur local ou un disque dur hébergé par un serveur distant. De préférence, la mémoire de données 13 prend la forme d'un disque dur local. La mémoire de données 13 est notamment apte à enregistrer, par exemple sous la forme d'un ou plusieurs fichiers, des données générées par une IHM (pour Interface Homme Machine) ou par des sondes de consommation ou encore des données acquises par l'intermédiaire d'un autre module. Les données mémorisées peuvent avoir été renseignées, dès la mise en route du dispositif selon l'invention ou au cours du temps, par un utilisateur via une IHM.

Le dispositif électronique communicant 10 selon l'invention est dédié en particulier à l'analyse de performances d'une application web qui sera généralement hébergée sur un dispositif électronique communicant telles qu'une infrastructure informatique. Ainsi, **selon un autre aspect,** l'invention porte sur un **système 2 pour l''analyse de performances d'une application web.** Un exemple d'un système 2 pour l'analyse de performances d'une application web selon l'invention est présenté en figure 1. Outre, un dispositif électronique communicant 10 pour l'analyse de performances d'une application web selon l'invention, un tel système peut comporter un deuxième dispositif électronique communicant 20 configuré pour exécuter l'application web à analyser et pour recevoir un message de requête de test de performance, restauré MR2' ou non MR1, et/ou émettre un message de réponse à une requête MRR1, MRR2.
En particulier le deuxième dispositif communicant peut correspondre à une infrastructure informatique comportant un ou plusieurs serveurs.
De manière avantageuse, un tel système peut comprendre un troisième dispositif électronique communicant 30 configuré pour réaliser des tests de performance d'une application web et pour recevoir un message de réponse, anonymisé MRR2' ou non MRR1, à une requête de test de performances.

C'est par exemple au sein d'un tel système que peut s'exécuter un procédé selon l'invention. En effet, **selon un autre aspect,** l'invention porte sur un **procédé 1 pour l'analyse de performances d'une application web comportant un traitement d'anonymisation 400 à la volée de données de production.** Un tel procédé peut être mis en œuvre par un premier dispositif électronique tel que décrit précédemment. Alternativement, il peut aussi être mis en œuvre par un premier dispositif électronique et un deuxième dispositif électronique tels que décrits précédemment.

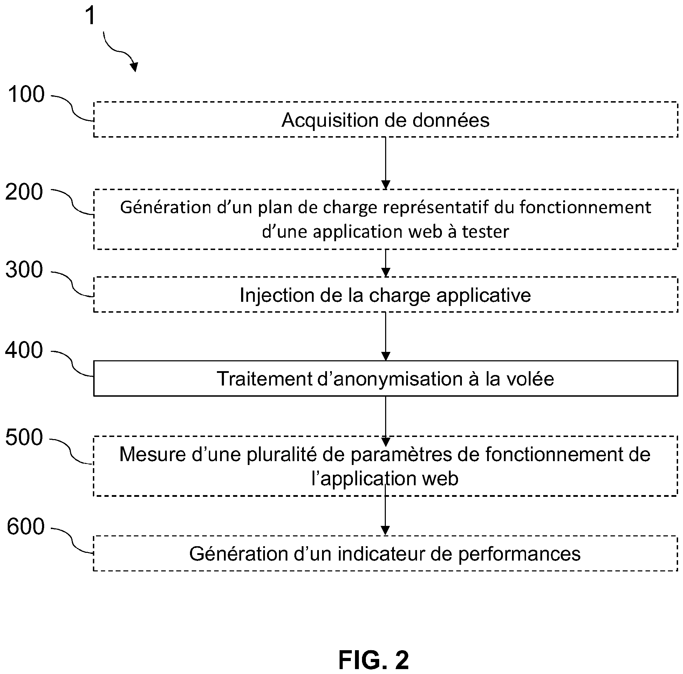

Comme illustré à la **figure 2** et comme cela sera détaillé par la suite, un procédé selon l'invention comporte une étape de traitement d'anonymisation 400 à la volée de données de production d'une application web.

En outre, il peut comporter des étapes d'acquisition 100 de données, de génération 200 d'un plan de charge, d'injection 300 d'une charge applicative, de mesure 500 d'une pluralité de paramètres de fonctionnement de l'application web, et de génération 600 d'au moins une valeur d'indicateur de performance de l'application web.

Un tel procédé comprend avantageusement **une étape d'acquisition 100 de données.** Cette étape d'acquisition 100 peut par exemple être réalisée par une unité de traitement d'un dispositif électronique communicant 30.

Cette étape d'acquisition 100 correspond par exemple au chargement de paramètres et règles de fonctionnement permettant la mise en œuvre du procédé. Cette étape peut être réalisée juste avant les étapes suivantes du procédé. Cette étape d'acquisition 100 de données comporte plus particulièrement le chargement de données, de préférence mémorisées sur une mémoire de données du dispositif électronique communicant en charge d'effectuer le test de performances de l'application web. Les données acquises peuvent inclure des données d'identification de ressources utilisées et de leur niveau d'utilisation maximum par le dispositif informatique mettant en œuvre l'application web testée, des données correspondant à des seuils prédéterminés de paramètre de qualité de service, au-delà desquels l'application web testée est considérée en défaillance, des règles de consommation des ressources et un plan de charge prédéterminé représentatif du fonctionnement de l'application web testée.

Une fois l'étape d'acquisition 100 de données effectuée, un procédé selon l'invention peut comporter **une étape de génération 200 d'un plan de charge.** Cette étape de génération 200 d'un plan de charge peut par exemple être mise en œuvre par une unité de traitement 11 d'un dispositif électronique communicant 30.

Comme décrit précédemment, un plan de charge peut être préalablement enregistré sur une mémoire de données du dispositif électronique communicant en charge d'effectuer le test de performances de l'application web. Ainsi, une pluralité de plan de charges peuvent être enregistrés dans une telle mémoire de données, chaque plan de charge pouvant être associé à un scénario particulier d'un test de performances, tel qu'un test de non régression, un test de recherche de limites notamment associées à une charge utilisateur maximale ou encore à une vitesse de traitement, un test d'endurance consistant à déterminer la tenue des limites de performances dans le temps avant qu'apparaissent des dérives de performances, un test de « crash » visant à analyser le comportement d'un ou de plusieurs serveurs sur lesquels est mis en œuvre l'application web. Ainsi, un plan de charge peut être représentatif du fonctionnement classique, ou de la charge nominale, de l'application web à tester, ou peut être utilisé pour générer des contraintes sur le dispositif informatique simulant l'activité et donc l'utilisation de ressources par l'application web à tester, tels que selon les scénarios de test de performances décrit juste avant. La charge nominale correspond à l'activité courante sur l'applicatif ou la charge habituellement observée en production pour l'application web. Cela peut correspondre par exemple à une distribution de différents types de scénarios reproduisant les principales actions impliquées dans la mise en œuvre de l'application web, avec par exemple combien de scénarios à l'heure de chacun des types doit être joué pour mimer le fonctionnement de l'utilisation de l'application web.

Ainsi, un plan de charge peut avantageusement comporter des valeurs sur les paramètres suivants : les différents types de scénario, la pondération de chacun de ces scénarios métiers (e.g. la proportion relative des uns par rapport aux autres), et le niveau de charge globale (e.g.la volumétrie cible ou le débit de requêtes souhaité au cours du procédé). De façon équivalente, il peut comporter des informations sur le nombre de scénarios de chaque type exécuté en simultané, par exemple pendant une heure. Il peut aussi comporter des informations sur le dispositif informatique testée.

Un plan de charge peut ainsi se caractériser par un ensemble de requêtes, généralement enregistrées dans un fichier de commande de charge comportant le code devant être exécuté. L'exécution du fichier de commande de charge peut produire un certain nombre de requêtes capables d'initier des actions aussi diverses que la création, la consultation, la modification, la suppression de fichiers ou l'impression, la copie et l'affichage de données. Ces actions seront généralement similaires aux actes métiers principaux pris en charge lors de l'utilisation de l'application web. Ainsi, comme cela sera détaillé par la suite, un procédé selon l'invention peut également comporter une étape d'injection d'une charge applicative.

Avantageusement, un plan de charge peut comporter un référentiel de charge applicative configuré pour mémoriser des champs relatifs à la date de début de la charge, il s'agit par exemple d'une date absolue évaluée relativement à une horloge interne du dispositif informatique réalisant le test de l'application web ou d'une date relative au début d'un scénario de test. Il peut également comprendre la date de fin de la charge ou la durée de la charge, par exemple un nombre de secondes.

Suite à la génération d'un plan de charge, un procédé 1 d'analyse de performances d'une application web peut **comporter une étape d'injection 300** de la charge applicative relative à un scénario de test de performances préalablement déterminé. Ladite étape d'injection 300 de la charge applicative peut être mise en œuvre par un module d'injection porté par un dispositif électronique communicant.

Les données de charge, contenues dans le plan de charge, peuvent être utilisées par le module d'injection afin de réaliser un plan de charge permettant de simuler une activité d'une application web avec par exemple l'ouverture et l'envoi de fichiers, des sauvegardes ou encore de la navigation sur internet.

La soumission du dispositif informatique à la charge applicative est de façon préférée obtenue en utilisant des mécanismes d'injection tels que JMeter®, Tsung® ou Gatling®. De préférence, cela est réalisé par l'injection de requêtes selon un plan de charge prédéterminé.

Lors de l'étape d'injection, un dispositif électronique tel que le troisième dispositif électronique communicant enverra des requêtes à destination d'une application web et ces requêtes seront avantageusement interceptées par le premier dispositif électronique communicant. Pour permettre l'utilisation en continue des données en production de l'application web à tester, un procédé 1 d'analyse de performances d'une application web conforme à l'invention comporte un **traitement d'anonymisation 400 à la volée.** Le traitement d'anonymisation 400 à la volée peut être mis en œuvre par une unité de traitement 11. Cette unité de traitement peut être intégrée au dispositif électronique communicant 20 hébergeant l'application web ou bien être déporté dans un dispositif électronique communicant 10, pouvant notamment prendre la forme d'un serveur proxy. Le traitement d'anonymisation 400 suit généralement l'étape d'injection 300 de la charge applicative.

Pour permettre le respect des politiques de confidentialité relatives à un aspect métier particulier, il convient de procéder à une anonymisation de tout ou partie des données en production utilisées pour la réalisation d'un test de performances. Un tel aspect métier peut par exemple correspondre à un ensemble de règles préétablies à partir desquelles des données sensibles seront déterminées.

Ainsi, le traitement d'anonymisation peut comporter une transformation des données sensibles issues de données de production, selon toute technique de transformation de données adaptée. De manière avantageuse, une telle transformation peut correspondre à toute technique de cryptage de données visant à rendre celles-ci incompréhensibles lors de leur lecture par dispositif tiers, notamment un dispositif électronique communicant 30. De préférence, une telle transformation des données sensibles issues de données de production, peut correspondre à toute technique d'encodage de manière à conserver une cohérence entre une donnée sensible et la donnée transformée correspondante et permettre sa compréhension lors de leur lecture par un dispositif tiers, notamment un dispositif électronique communicant 30. En effet, pour la réalisation de tests de performances il peut être primordial qu'au moins une partie des données encodées soient accessibles, l'encodage de données sensibles permet alors de substituer la donnée sensible par une donnée de même nature anonymisée. A titre d'exemple non limitatif, une donnée sensible relative à un prénom masculin pourra être encodée de sorte que celle-ci soit remplacée par une donnée encodée (i.e. anonymisée) relative à un autre prénom masculin et ne permettant pas ainsi d'identifier la personne.

Comme décrit précédemment, l'étape d'injection 300 d'une charge applicative peut correspondre à l'envoi d'un ou de plusieurs messages de requêtes. De tels messages de requêtes peuvent consister en une requête émise sous le protocole de communication HTTP (« Hypertext Transfer Protocol » selon une terminologie anglo-saxonne) codant une commande de type GET par exemple. Ainsi, un traitement d'anonymisation 400 à la volée pourra de préférence comporter une modification d'une requête, par exemple de type HTML émise sous un protocole de communication de type HTTP, avant sa transmission à l'application Web sujette au test de performance.

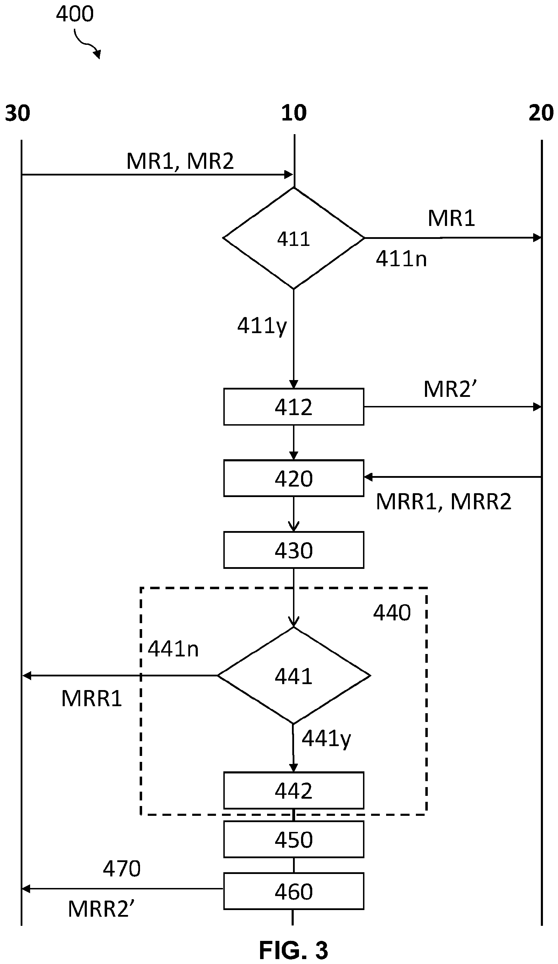

Un mode de réalisation d'un traitement d'anonymisation sera maintenant détaillé en lien avec la **figure 3****.**

Un traitement d'anonymisation 400 selon l'invention peut comprendre une étape de comparaison 411 des données d'un message de requête MR1 à un référentiel de correspondance 16 entre des données sensibles et des données anonymisées suite à la réception dudit message de requête préalablement émis par un dispositif électronique communicant 30. Cela permet avantageusement d'identifier une ou plusieurs données anonymisées.

Ainsi, si l'étape de comparaison 411 ne permet pas l'identification de données anonymisées, le message de requête MR1 est directement transmis 411n par le moyen de communication 12 du premier dispositif électronique communicant 10 au deuxième dispositif électronique communicant 20. Lors de l'initiation de l'envoi d'un message de requête MR1, ce dernier peut coder une demande d'accès à une page d'accueil de l'application web à tester auprès du premier dispositif électronique communicant 10. Nous partirons du principe que lors de l'initialisation de l'envoi d'un message de requête MR1, celui-ci ne contient aucune donnée anonymisée.

En revanche, au cours d'un test de performances, de multiples messages de requêtes sont généralement échangés. L'accès à ces données de production s'avère bien souvent nécessaire pour la mise en œuvre d'un procédé d'analyse de performances d'une application web.

Supposons que le deuxième dispositif électronique communicant 20 comprenne un serveur comportant des données métier associées au domaine médical, telles qu'à titre d'exemple non limitatifs des données de remboursement de produits médicamenteux prescrits par un médecin traitant pour un individu donné, le nom, le prénom, la date de naissance, le sexe ou encore le numéro de sécurité sociale associé audit individu.

Ainsi, un message de requête MR2 peut comporter une ou plusieurs données anonymisées, pour lesquelles une correspondance entre chaque donnée anonymisée et le référentiel de correspondance 16 pourra être identifiée 411y lors de l'étape de comparaison 411.

L'identification de données anonymisées est suivie d'une étape de restauration 412 d'une donnée à anonymiser, en comparant chaque donnée anonymisée préalablement identifiée au référentiel de correspondance 16 afin d'identifier la donnée correspondante qui avait préalablement fait l'objet d'une anonymisation. Pour illustrer une telle identification, supposons qu'un premier message de requête encodant une commande d'accès aux données médicales d'individus ait été préalablement émis et que ces données, une fois anonymisées aient été communiquées au dispositif électronique communicant 30. Le message de requête MR2 pourrait par exemple correspondre à un message de requête encodant des données commandant un accès aux remboursements et aux médicaments associés à un individu donné, dont un exemple est illustré ci-après.
<MR2
<Remboursement : ?
<Médicament : ?
<Numéro Sécurité sociale : 1 89 08 01 007 117 15

En l'espèce le numéro de sécurité sociale identifié lors de l'étape 411 correspond à une donnée anonymisée. Lors de l'étape de restauration 412, la donnée sensible (i.e. donnée à anonymiser) qui avait été préalablement identifiée et enregistrée dans le référentiel de correspondance entre une donnée sensible et une donnée anonymisée permettra ainsi de générer un message de requête MR2' restaurée comprenant la donnée correspondante restaurée. Un exemple de message de requête MR2' restaurée comprenant une telle donnée restaurée, en l'espèce le numéro de sécurité sociale est présenté ci-après.
<MR2'
<Remboursement :?
<Médicament : ?
<Num_Sec : 1 90 06 06 069 143 18

Le message de requête MR2' restaurée est ensuite transmis au dispositif électronique communicant 20.

Qu'un message de requête comporte une donnée anonymisée MR2 ou non MR1, la transmission d'un message de requête MR1 ou d'un message de requête MR2' restauré, le deuxième dispositif électronique communicant 20 est en mesure de lire les données desdits message de requête et à émettre un message de réponse MRR à destination du dispositif électronique communicant 10.

Supposons maintenant que ledit message de réponse MRR1, MRR2, comporte des données relatives à l'ensemble des prescriptions de produits médicamenteux pour l'individu en question. Ledit deuxième dispositif électronique communicant 20 transmet alors, au premier dispositif électronique communicant 10, le message de réponse MRR comprenant les données correspondantes, dont un exemple est représenté ci-après.
<MRR2
<Nom : Dupont
<Prénom : Jean
<Age : 29
<Sexe : M
<Remboursement :_
<Médicament :_
<Numéro Sécurité sociale : 1 90 06 06 069 143 18

Le message de réponse MRR représenté ci-avant présente ainsi un exemple de données encodées par un message de réponse MRR, les données d'un seul individu sont représentées bien que ledit message de réponse MRR puisse comprendre une pluralité de données associées à plusieurs individus ou à plusieurs produits médicamenteux. Le premier dispositif électronique communicant 10 reçoit 420 ainsi ledit message de réponse MRR1, MRR2 et une étape d'identification 430 mise en œuvre par l'unité de traitement 11 du dispositif électronique communicant 10, va permettre de mettre en évidence des données à anonymiser en comparant les données issues du message de réponse MRR1, MRR2 au référentiel d'identification de données sensibles 14 dudit dispositif électronique communicant 10. Avantageusement, un tel référentiel d'identification de données sensibles peut être configuré pour respecter des règles métier. Dans l'exemple présenté ici, une règle métier peut consister à associer une donnée identifiée comme étant jugée sensible ou non. Dans le message de réponse MRR1, MRR2 présenté, toutes les données, sauf la donnée associée au sexe de l'individu et aux prescriptions, sont considérées comme étant sensibles.

Lors de ladite étape d'identification 430, les données sensibles identifiées relatives aux champs associés au Nom, au Prénom, à l'âge et au numéro de sécurité sociale vont ensuite être anonymisées lors d'une étape d'encodage 440 mise en œuvre par l'unité de traitement 11 du dispositif électronique communicant 10. Une telle étape 440 peut comprendre une comparaison 441 desdites données sensibles identifiées au référentiel d'anonymisation 15.

Si la comparaison 441 ne permet pas d'identifier une donnée sensible alors les données présentes dans le message de réponse MRR1 sont directement transmis 441n, dans un message de réponse à une requête MRR1 sans être anonymisées, par le moyen de communication 12 au troisième dispositif électronique communicant 30.

De manière avantageuse, l'anonymisation des données sensibles identifiées peut correspondre à un encodage desdites données sensibles selon des techniques de transformation de données connues. Selon un mode de réalisation préféré, les données sensibles identifiées peuvent être anonymisées selon des règles métier préalablement configurées.

En revanche, si la comparaison 441 permet l'identification 441y de données sensibles, lesdites données sensibles identifiées sont ainsi anonymisées lors d'une étape de transformation 442. L'anonymisation de chacun des champs de données sensibles préalablement identifiés peut faire l'objet d'un encodage particulier. Le référentiel d'anonymisation peut générer pour chaque champ associé à une donnée sensible de nouvelles données de remplacement respectant une règle métier. A titre d'exemple, en fonction du sexe de l'individu, la donnée associée au prénom sera remplacée par une donnée associée à un prénom masculin. Le changement de la donnée associée à l'âge de l'individu entrainera également la modification du numéro de sécurité sociale d'une part pour conserver la confidentialité des données et d'autre part pour conserver une cohérence au sein des données pour la réalisation de tests de performance. De manière analogue, le changement sexe de l'individu, si celui-ci était considéré comme une donnée sensible, entrainerait également la modification du numéro de sécurité sociale.

Un exemple d'anonymisation de données du message de réponse MRR est représenté ci-après.
<MRR2'
<Nom : Pierre
<Prénom : Martin
<Age : 30
<Sexe : M
<Remboursement :_
<Médicament :_
<Num_Sec : 1 89 08 01 007 117 15

Une fois les données anonymisées, un procédé 1 d'analyse de performances conforme à l'invention comprend une étape d'enregistrement 450 sur un référentiel de correspondance 16 entre les données anonymisées, c'est-à-dire celles présentes dans le message de réponse MRR2', et les données sensibles identifiées, c'est-à-dire les données présentes dans le message de réponse MRR2. Les données anonymisées ainsi enregistrées pourront être facilement décodées ultérieurement. Ladite étape d'enregistrement est suivie par une étape de génération 460, par l'unité de traitement 11 du dispositif électronique communicant 10, d'un message de réponse anonymisé MRR2', puis par une étape d'envoi 470 par le moyen de communication 12 du premier dispositif électronique communicant, dudit message de réponse anonymisée à destination du troisième dispositif électronique communicant 30.

Qu'il s'agisse d'un message de réponse à une requête MRR1 ou un message de réponse à une requête anonymisé MRR2', ces derniers comprennent des données nécessaires à l'analyse de performances de l'application web, notamment liées aux mesures effectuées par la ou les sondes. Les données nécessaires à l'analyse de performances de l'application web peut correspondre à toutes les données qui en tant que telles ou dont les métadonnées associées (fréquences, taille, vitesse...) peuvent être utilisées dans un test de performance.

En outre, un procédé 1 d'analyse de performances conforme à l'invention peut comporter une **étape de mesure 500 d'une pluralité de paramètres de fonctionnement de l'application web.** L'étape de mesure 500 d'une pluralité de paramètres de fonctionnement peut être mise en œuvre par des sondes et/ou un module de collecte de métriques. En parallèle de la réception de réponses, lesdites réponses pouvant comprendre une ou plusieurs informations en lien avec une ressource, aux messages de requêtes émis par un dispositif électronique communicant chargé de tester l'application web, le procédé peut comporter la mesure d'une pluralité de paramètres de fonctionnement de l'application web.

Les paramètres de fonctionnement de l'application Web peuvent correspondre à des paramètres de fonctionnement en lien avec le dispositif informatique hébergeant l'application Web ou encore à des paramètres relatifs au fonctionnement de l'application Web. Ainsi, un module de collecte de métriques est apte à, de préférence configuré pour, mesurer la consommation des ressources du dispositif informatique et/ou les niveaux de service de l'application web testée. De façon préférée, le module de collecte de métriques est configuré pour générer des valeurs mesurées de niveaux de service de l'application web testée.

Pour cela, le module de collecte de métriques peut faire appel à une sonde ou à une pluralité de sondes. La ou les sondes permettent de collecter des données sur la consommation des ressources du dispositif informatique et plus particulièrement de chaque structure applicative la composant. Plusieurs ressources peuvent être mesurées en parallèle. La ou les sondes peuvent également être utilisées pour mesurer les niveaux de services de l'application web. Le module de collecte peut faire appel à un fichier de surveillance comportant des règles de collecte de métriques. Ces règles de collecte de métriques peuvent spécifier des données qui doivent être enregistrées lors de l'exécution de l'application web.

Ces mesures peuvent par exemple être réalisées à partir d'une sonde de type « Nigel's Monitor » (Nmon) ou « Performance Monitor » (Perfmon). Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'un dispositif informatique. Les informations collectées peuvent par exemple correspondre à des pourcentages d'utilisation de ressources, des temps de réponse, des temps de traitement mais également le statut des ports, le taux d'occupation du système de fichiers, le taux de fonctionnement du ramasse miettes ou récupérateur de mémoires (pour « garbage collector » en anglais) pour les applications J2EE (pour « Java Enterprise Edition » en anglais).

Ces sondes peuvent être associées à chaque paramètre (e.g. ressource ou fonctionnalités) pour remonter les informations de mesure ou métriques, représentant par exemple l'état de fonctionnement des ressources et la consommation associée. Pour chaque paramètre, la ou les sondes définissent un identifiant de paramètre et une valeur de paramètre. Les valeurs des paramètres peuvent être suivies en continu ou à des intervalles configurables de façon à obtenir des informations pour chaque paramètre en fonction du temps. Ces informations peuvent être stockées dans une mémoire de données.

Le module de collecte de métrique permet de collecter et mesurer la consommation des ressources et/ou les niveaux de service de l'application web ou du dispositif informatique hébergeant l'application web.

En outre, un procédé 1 d'analyse de performances conforme à l'invention peut comporter une **étape de génération 600 d'au moins une valeur d'indicateurs de performance de l'application web.** Cette étape de génération 600 d'au moins une valeur d'indicateur de performance peut être mise en œuvre par une unité de traitement d'un dispositif électronique communicant 30. Avantageusement, elle suit l'étape de mesure 500 d'une pluralité de paramètres de fonctionnement de l'application web. En outre elle se base généralement sur les valeurs de paramètres de fonctionnement mesurées.

En particulier, un tel indicateur peut être généré en fonction des paramètres de consommation et/ou des niveaux de service préalablement mesurés lors de l'étape 500. La génération dudit indicateur est alors restitué à un opérateur au travers d'une interface homme-machine adaptée équipant alors le dispositif électronique communicant utilisé pour tester l'application web. L'indicateur de performance peut ainsi prendre la forme d'une valeur traduisant les mesures préalablement effectuées, une telle valeur peut alors signifier que les données correspondant à des seuils prédéterminés de paramètre de qualité de service, au-delà desquels l'application web testée est considérée en défaillance, ont été dépassés ou au contraire n'ont pas été franchi.

Cela peut avantageusement donner une idée à un opérateur du fonctionnement de l'application web.

Préférentiellement, un indicateur de performance selon l'invention peut prendre la forme d'un tableau de valeurs, ou bien un ou plusieurs graphes, présentant les données mesurées par une ou plusieurs sondes en fonction du temps et indiquant tout dépassement d'un seuil prédéterminé de paramètres de consommation et/ou de qualité de service en comparaison avec les données mesurées.

Dans le cadre de la comparaison avec les données de mesure de la consommation des ressources, les valeurs maximales prédéterminées peuvent par exemple correspondre à des seuils prédéterminés d'utilisation maximum. Dans le cadre de la comparaison avec les données de mesure de niveaux de service, les valeurs maximales prédéterminées peuvent par exemple correspondre à des seuils fixés lors de la mise en place des applications. Les valeurs maximales prédéterminées peuvent être également librement fixées par la direction des systèmes d'information dans le cadre de sa politique de gestion de la performance de ses installations. Il faut comprendre qu'il peut être équivalent d'utiliser des valeurs minimales prédéterminées à la place de valeurs maximales prédéterminées. Cela est notamment le cas pour l'appréciation des niveaux de service.

La détection d'une défaillance via les valeurs mesurées de niveaux de service permet de suivre la performance de l'application web et peut par exemple se référer aux performances constatées par les utilisateurs finaux de l'application web telle que par exemple un temps de réponse moyen.

Ainsi, le procédé selon l'invention peut comporter une étape de détection de défaillance comportant une comparaison de seuils prédéterminés de paramètre de qualité de service aux valeurs mesurées de la consommation des ressources et/ou des niveaux de service de l'application web. En outre, il peut comporter une identification d'un dépassement des valeurs maximales prédéterminées par les valeurs mesurées.

Le procédé selon l'invention peut également comporter une étape d'analyse de défaillance, ladite étape d'analyse de défaillance comportant, en présence d'un dépassement d'un seuil prédéterminé de paramètre de qualité de service, une analyse d'un comportement de l'application web et une génération des données de défaillances capables d'informer sur la nature et/ou la source de la défaillance.

Ainsi, une fois une défaillance provoquée, le procédé peut comporter une détermination, notamment à l'aide d'un module de gestion de performance applicative, de la nature de la défaillance. La défaillance peut avoir de nombreuses natures. Par exemple, elle peut être liée à des problématiques de configuration système (nombre de fichiers ouvert, nombre de ports, etc.) tout comme à des problèmes de configuration applicative (file jms, pool jdbc, etc...) voir à des problèmes de conception de l'application web tel qu'un couplage trop fort entre des traitements.

Ainsi, le procédé comporte de préférence une sélection de la nature de la défaillance parmi les défaillances suivantes :
- configuration matérielle du dispositif informatique,
- configuration logicielle du dispositif informatique,
- configuration de l'application web, et
- conception de l'application web.

Ainsi, les soutions proposées dans la présente invention permettent d'anonymiser à la volée des données de production d'une application web au fur et à mesure qu'elles sont transmises par l'application web. Cette anonymisation sélective d'un ensemble de données permet donc de fournir un jeu de données complet pour la réalisation de tests de performance sur des applications web en toute sécurité / confidentialité. En outre, au-delà de l'analyse de performance, l'invention pourra aider un administrateur à corriger les éventuelles défaillances identifiées.

## Revendications

1. Procédé (1) pour l'analyse de performances d'une application web comportant un traitement d'anonymisation (400) à la volée de données de production à destination d'un troisième dispositif électronique (30), lesdites données de production étant générées suite à un message de requête (MR1, MR2') de test de performances, du troisième dispositif électronique (30), transmis à ladite application web,
ledit traitement d'anonymisation (400) étant mis en œuvre par un premier dispositif électronique communicant (10) comportant une unité de traitement (11), un moyen de communication (12), et une mémoire de données (13) configurée pour mémoriser un référentiel d'identification de données sensibles (14) et un référentiel d'anonymisation (15), ledit traitement d'anonymisation (400) à la volée de données de production de l'application web comprenant :
- une étape de réception (420), par un moyen de communication (12), d'un message de réponse (MRR1, MRR2) au message de requête (MR1, MR2') de test de performances, suite à l'émission dudit message de réponse (MRR1, MRR2) par un deuxième dispositif électronique communicant (20) exécutant l'application web ;
- une étape d'identification (430), par l'unité de traitement (11) à partir du référentiel d'identification de données sensibles (14), de données à anonymiser dans le message de réponse (MRR1, MRR2) ;
- une étape d'encodage (440), par l'unité de traitement (11) à partir du référentiel d'anonymisation (15), comportant la génération de données anonymisées à partir des données à anonymiser préalablement identifiées;
- une étape de génération (460), par l'unité de traitement (11) à partir des données anonymisées et du message de réponse (MRR2), d'un message de réponse anonymisé (MRR2') ; et
- une étape d'envoi (470), par le moyen de communication (12), du message de réponse anonymisé (MRR2') au troisième dispositif électronique (30), ledit message de réponse anonymisé (MRR2') comportant des données nécessaires à l'analyse de performances de l'application web.

2. Procédé (1) pour l'analyse de performances d'une application web selon la revendication précédente, **caractérisé en ce qu'**il comporte en outre une étape d'enregistrement (450), sur un référentiel de correspondance (16) entre des données à anonymiser et des données anonymisées de la mémoire de données (13), d'une correspondance entre chacune des données à anonymiser et chacune des données anonymisées correspondantes.

3. Procédé (1) pour l'analyse de performances d'une application web selon l'une des revendications 1 ou 2, **caractérisé en ce qu'**il comporte en outre une étape de mesure (500) d'une pluralité de paramètres de fonctionnement de l'application web, de préférence au moins en partie à partir d'une pluralité de messages de réponse anonymisés (MRR2').

4. Procédé (1) pour l'analyse de performances d'une application web selon la revendication précédente, **caractérisé en ce qu'**il comporte en outre une étape de génération (600) d'au moins une valeur d'indicateur de performance de l'application web.

5. Procédé (1) pour l'analyse de performances d'une application web selon l'une quelconque des revendications précédentes, **caractérisé en ce qu'**il comporte en outre une étape de génération (200) d'au moins un plan de charge comportant au moins un scénario d'un test de performances apte à permettre une génération d'une pluralité de messages de requête (MR1, MR2).

6. Procédé (1) pour l'analyse de performances d'une application web selon la revendication précédente, **caractérisé en ce que** le plan de charge est préalablement enregistré sur une mémoire de données du troisième dispositif électronique communicant (30) en charge d'effectuer le test de performances de l'application web.

7. Procédé (1) pour l'analyse de performances d'une application web selon l'une des revendications 5 ou 6, **caractérisé en ce qu'**il comporte en outre une étape d'injection (300) d'une charge applicative relative au scénario de test de performances, ladite étape d'injection (300) de la charge applicative étant mise en œuvre par un module d'injection du troisième dispositif électronique communicant (30).

8. Procédé (1) pour l'analyse de performances d'une application web selon la revendication 7, **caractérisé en ce que** la charge applicative permet de simuler une activité de l'application web au travers de requêtes à destination de l'application web et **en ce que** ces requêtes sont interceptées par le premier dispositif électronique communicant (10).

9. Procédé (1) pour l'analyse de performances d'une application web selon l'une quelconque des revendications précédentes, **caractérisé en ce qu'**il comporte une étape de comparaison (411) des données d'un message de requête (MR1, MR2) au référentiel de correspondance (16), et, lorsque ledit message de requête (MR1) ne comprend aucune donnée anonymisée, une transmission (411 n), par le moyen de communication (12), du message de requête (MR1) au deuxième dispositif électronique communicant (20).

10. Procédé (1) pour l'analyse de performances d'une application web selon la revendication précédente, **caractérisé en ce qu'**il comporte une identification (411y) d'une donnée anonymisée dans le message de requête (MR2) puis une étape de restauration d'une donnée anonymisée (412), ladite étape de restauration comportant, par exemple à partir du référentiel de correspondance (16), la substitution dans le message de requête (MR2) d'une donnée anonymisée par une donnée à anonymiser correspondante de façon à générer un message de requête (MR2') restaurée.

11. Procédé (1) pour l'analyse de performances d'une application web selon l'une quelconque des revendications précédentes **caractérisé en ce que** l'étape d'encodage (440) correspond à une anonymisation et/ou à une pseudonymisation de tout ou partie des données à anonymiser.

12. Produit programme d'ordinateur comportant une ou plusieurs instructions interprétables ou exécutables par une unité de traitement d'un dispositif électronique communicant (10), **caractérisé en ce que** l'interprétation ou l'exécution desdites instructions par ledit dispositif électronique communicant provoque la mise en œuvre d'un procédé (1) selon l'une quelconque des revendications 1 à 11.

13. Dispositif électronique communicant (10) pour l'analyse de performances d'une application web configuré pour exécuter un traitement d'anonymisation à la volée de données de production, lesdites données de production étant générées suite à un message de requête de test de performances, d'un troisième dispositif électronique (30), transmis à ladite application web, ledit dispositif électronique communicant comprenant :
- un moyen de communication (12) configuré pour recevoir un message de réponse (MRR1, MRR2) au message de requête de test de performances (MR1, MR2), suite à l'émission dudit message de réponse (MRR1, MRR2) par un deuxième dispositif électronique communicant exécutant l'application web et
- une mémoire de données (13) configurée pour mémoriser un référentiel d'identification de données sensibles (14) et un référentiel d'anonymisation (15),
- une unité de traitement (11) configurée pour analyser lesdits message de requête (MR1, MR2) de test de performances et/ou message de réponse (MRR1, MRR2) et pour mettre un œuvre un traitement d'anonymisation à la volée des données de production, ladite unité de traitement (11) étant en particulier configurée pour :
- Identifier, à partir du référentiel d'identification de données sensibles (14), des données à anonymiser dans le message de réponse (MRR1, MRR2) ;
- Générer, à partir du référentiel d'anonymisation (15), des données anonymisées à partir des données à anonymiser préalablement identifiées ; et
- Générer, à partir des données anonymisées et du message de réponse (MRR2), un message de réponse anonymisé (MRR2').
ledit moyen de communication (12) étant aussi configuré pour envoyer le message de réponse anonymisé (MRR2') au troisième dispositif électronique, ledit message de réponse anonymisé (MRR2') comportant des données nécessaires à l'analyse de performances de l'application web.

14. Système (2) pour l''analyse de performances d'une application web comportant :
- un dispositif électronique communicant (20) configuré pour exécuter l'application web à analyser et pour recevoir un message de requête (MR1, MR2') de test de performance et/ou émettre un message de réponse à une requête (MRR1, MRR2) ;
- un dispositif électronique communicant (10) pour l'analyse de performances d'une application web selon la revendication 13.

15. Système (2) pour l''analyse de performances selon la revendication 14, **caractérisé en ce qu'**il comporte en outre un troisième dispositif électronique configuré pour émettre le message de requête de test de performance et recevoir le message de réponse, de préférence anonymisé.
